# EUROPÄISCHE PATENTSCHRIFT

(11) **EP 1 987 573 B1**
(45) Veröffentlichungstag und Bekanntmachung des Hinweises auf die Patenterteilung: **19.07.2017**
(21) Anmeldenummer: 07704216.6
(22) Anmeldetag: 30.01.2007
(51) Int. Cl.: H02H 7/085, H02H 3/00

(54) **VERFAHREN ZUR BEGRENZUNG DER ÜBERSCHUSSKRAFT EINES FREMDKRAFTBETÄTIGTEN SCHLIESSTEILS**
METHOD FOR LIMITING THE EXCESS FORCE OF A CLOSING PART WHICH IS ACTUATED BY AN EXTERNAL FORCE
PROCÉDÉ POUR LIMITER LA FORCE EXCÉDENTAIRE D'UN ÉLÉMENT DE FERMETURE ACTIONNÉ PAR UNE FORCE EXTÉRIEURE

(30) Priorität: 14.02.2006 DE 102006006821
(43) Veröffentlichungstag der Anmeldung: 05.11.2008
(73) Patentinhaber: Continental Automotive GmbH, 30165 Hannover (DE)
(72) Erfinder: FUCHS, Gerhard, 3423 St. Andrä-Wördern (AT); HOLZMANN, Stefan, 2191 Gaweinstal (AT); MORAWEK, Roman, 1020 Wien (AT)
(86) Internationale Anmeldenummer: PCT/EP2007/050863
(87) Internationale Veröffentlichungsnummer: WO 2007/093496

(56) Entgegenhaltungen:
- EP-A- 1 487 078
- DE-A1- 19 633 941
- US-A1- 2004 183 493

## Beschreibung

### Technisches Gebiet

Die Erfindung betrifft ein Verfahren zur Begrenzung der Überschusskraft eines fremdkraftbetätigten Schließteils einer Verstellvorrichtung, bei dem ein Einklemmschutzsystem während eines Verstellvorgangs zumindest innerhalb eines Teilbereichs des Verstellwegs jeweils in vorgegebenen Positionen aktuelle Verstellkraftwerte ermittelt und diese mit Verstellkraft-Vergleichswerten vergleicht.

### Stand der Technik

Bei Verstelleinrichtungen, wie sie bei Kraftfahrzeugen für elektrisch betriebene Fensterheber oder Schiebedächer eingesetzt werden, ist zur Begrenzung der vom Antrieb erzeugten Überschusskraft ein Einklemmschutzsystem vorgeschrieben. Das Einklemmschutzsystem erkennt den Einklemmfall indem es während eines Verstellvorgangs an vorgegebenen Positionen aktuell ermittelte Verstellkraftwerte mit einer vorgegebenen Referenz vergleicht. Liegt ein Einklemmen vor, wird die Bewegung des Schließteils gestoppt und der Antrieb gegebenenfalls reversiert. Die Referenz wird durch Verstellkraft-Vergleichswerte gebildet, die üblicherweise am Ende der Fertigung für jede Verstelleinrichtung individuell durch einen Initialisierungslauf ermittelt und in Form einer so genannten Lernkurve in einem Speicher der Steuereinrichtung abgelegt werden.

Diese Lernkurve stellt aber eine Schwachstelle dar: Die der Lernkurve zugrunde gelegten Verstellkraft-Vergleichswerte sind schon bald nach der Erstinbetriebnahme nicht mehr aktuell, da sich die mechanischen Gegebenheiten der Verstellvorrichtung, insbesondere Reibungskräfte und anfängliche Schwergängigkeiten, am Anfang der Nutzungsphase sehr schnell ändern. Beim Initialisierungslauf werden diese Änderungen nicht erfasst. Dies hat zur Folge, dass das Einklemmschutzsystem insbesondere am Beginn der Nutzung nicht optimal arbeitet; im Einklemmfall ist eine Einklemmkraft wirksam, die größer oder kleiner ist, als bei genauer Kenntnis der tatsächlich wirkenden mechanischen Gegenkräfte erforderlich wäre. Das ist für die Sicherheit bzw. Stabilität der Verstellvorrichtung ungünstig.

Darüber hinaus ist die Aufnahme einer Lernkurve, die für jede Verstelleinrichtung individuell durchgeführt werden muss, mit entsprechenden Kosten bei der Herstellung verbunden.

In der DE 196 33 941 A1 wird ein KfZ-Stellantrieb vorgeschlagen, bei dem sich die Verstelleinrichtung an sich veränderte Gegebenheiten der Mechanik adaptiert. Hierfür wird ein als Referenz abgespeichertes Reibungskraft-Hubweg-Diagramm fortlaufend betriebsmäßig aktualisiert. Ein weiteres Beispiel dafür ist aus EP 1 487 078 bekannt.

Beim Aktualisieren tritt das Problem auf, dass am Anfang der Nutzungsdauer auf die sich rasch ändernden Gegebenheiten des mechanischen Systems eingegangen werden muss, mit anderen Worten, die Adaptionsgeschwindigkeit muss groß sein. Demgegenüber ist es im späteren Betreib wünschenswert, dass einmalig auftretende Störung, - beispielsweise wenn das KfZ auf einer Schlechtwegstrecke fährt -, möglichst nur geringfügig die Verstellkraft-Vergleichsdaten beeinflussen sollen. Hierfür ist aber eine niedrige Adaptionsgeschwindigkeit günstig.

### Darstellung der Erfindung

Der vorliegenden Erfindung liegt die Aufgabe zu Grunde, ein Verfahren zur Begrenzung der Überschusskraft anzugeben, bei dem im Einklemmfall eine möglichst kleine Einklemmkraft wirksam ist und das mit geringem Aufwand realisiert werden kann.

In einem Grundgedanken geht die Erfindung davon aus, die Anpassung der Verstellkraft-Vergleichswerte vom aktuellen Zustand des mechanischen Systems abhängig zu gestalten. Dadurch können die eingangs erwähnten widersprechenden Anforderungen realisiert werden, nämlich eine schnelle Anpassung unmittelbar nach der Herstellung der Verstellvorrichtung und eine langsame Anpassung mit zunehmender Nutzungsdauer. Mit anderen Worten, ein großer Vorteil der Erfindung liegt darin, dass das Ausmaß der Anpassung den in jedem Lebensabschnitt der Vorrichtung vorherrschende Anforderung angepasst werden kann. Damit spiegeln die vom Einklemmschutzsystem herangezogenen Verstellkraft-Vergleichswerte präzise die mechanische Wirklichkeit wider. Dies hat zur Folge, dass im Einklemmfall die Einklemmkraft geringer ist. Die Qualität des Einklemmschutzes ist dadurch besser.

In einer bevorzugten Ausgestaltung des Verfahrens kann vorgesehen sein, dass das Ausmaß der Anpassung d.h. der Aktualisierung der Verstellkraft-Vergleichswerte mit zunehmender Lebensdauer verringert wird. Dadurch ist die Fortschrittsgeschwindigkeit und Intensität des Anpassungsprozesses am Beginn der Nutzungsdauer hoch. Dies ist günstig, da während der Einlaufphase die vom Antrieb zu überwindende Gegenkraft stark schwankt. Im Ergebnis entsprechen schon nach wenigen Schließzyklen die im Speicher abgelegten Verstellkraft-Vergleichswerte den aktuell vorliegenden Gegebenheiten des mechanischen Systems. Daraus ergibt sich ein entscheidender Vorteil der Erfindung: bei der Herstellung der Verstellvorrichtung kann auf die Aufnahme einer Lernkurve vollständig verzichtet werden. Dies verringert die Produktionskosten. Ein elektrischer Fensterheber oder Schiebedach kann mit typenspezifischen Referenzdaten an den Hersteller des Kraftfahrzeugs ausgeliefert werden. Die aufwendige Ermittlung von individuellen Referenzdaten ist nicht mehr erforderlich. Das System adaptiert sich nach dem Einbau in das KfZ beim Kunden selbst. Die vergleichsweise ungenauen Referenzdaten schon nach wenigen, beim Hersteller des Kraftfahrzeugs ausgeführten Verstellzyklen mit aktuellen Verstellkraft-Vergleichswerten überschrieben und das System an de Zustand der Mechanik adaptiert. Anderseits ist es so, dass nach Abschluss der Einlaufphase Änderungen nur in einem geringen Ausmaß zugelassen werden. Dadurch bewirken einmalige äußere Ereignisse, wie beispielsweise das Durchfahren einer Schlechtwegstrecke oder einer Querrinne, kaum eine Verzerrung die Verstellkraft-Vergleichswerte. Sie bilden die mechanische Wirkli8chkeit auch nach einer längeren Nutzungsdauer sehr gut ab. Das Einklemmschutzsystem weist eine gute Robustheit auf.

In einer besonders bevorzugte Ausführungsform kann vorgesehen sein, dass die Geschwindigkeit der Approximation stufenweise durchgeführt wird. Dadurch kann das erfindungsgemäße Verfahren rechentechnisch mit geringem Aufwand realisiert werden, d.h. der Algorithmus braucht wenig Programmcode und wenig Rechenleistung.

Hierbei ist es zweckmäßig, wenn jeder Stufe ein Teilintervall der Nutzungsdauer zugeordnet wird und jedem dieser Teilintervalle eine Anzahl von Schließvorgängen zugeordnet ist.

Eine gute Anpassung an den durch den Nutzungsgrad vorgegebenen Zustand der mechanischen Verstellvorrichtung lässt sich dadurch erreichen, dass die Lebensdauer der Verstellvorrichtung in Teilintervalle unterteilt wird, die eine unterschiedliche Breite aufweisen. Dadurch kann der Algorithmus differenziert auf die jeweils vorliegenden Gegebenheiten eingehen.

Insbesondere kann es günstig sein, wenn die jedem Teilintervall zugeordnete Anzahl von Schließvorgängen mit zunehmender Nutzungsdauer größer wird.

Für eine gute Anpassung während der Einlaufphase kann es günstig sein, wenn in einem sich unmittelbar nach der Erstinbetriebnahme anschließenden ersten Teilintervall die Adaption mit großer Intensität vorgenommen wird.

Für eine hohe Anpassungsgeschwindigkeit kann es günstig sein, wenn bei einem Verstellvorgang, der dem ersten Teilintervall zugeordnet ist, bei der Adaption mehrere Verstellkraft-Vergleichswerte gleichzeitig adaptiert werden.

Ganz besonders vorteilhaft ist hierbei, wenn diese Verstellkraft-Vergleichswerte dabei um mehrere Quantisierungseinheiten vergrößert oder verkleinert werden.

Hinsichtlich geringer Herstellungskosten ist von besonderem Vorteil, wenn bei der Erstinbetriebnahme Referenzwerte verwendet werden, die für eine Klasse von Verstelleinrichtungen, z.B. für Fensterheber repräsentativ sind. Dadurch entfällt das aufwendige und umständliche Aufnehmen der Lernkurve, die zudem noch mit Fehler behaftet sein kann.

### Kurzbeschreibung der Zeichnungen

Zur weiteren Erläuterung der Erfindung wird im nachfolgenden Teil der Beschreibung auf die Zeichnungen Bezug genommen, aus denen weitere vorteilhafte Ausgestaltungen, Einzelheiten und Weiterbildungen der Erfindung zu entnehmen sind. Es zeigen:
- Figur 1: ein Szenario der Approximation gemäß dem Stand der Technik;
- Figur 2: ein Szenario der Approximation gemäß der vorliegenden Erfindung;
- Figur 3: eine Diagramm, das die erfindungsgemäße Abhängigkeit des Ausmaßes der Anpassung von der Nutzungsdauer darstellt.

### Ausführung der Erfindung

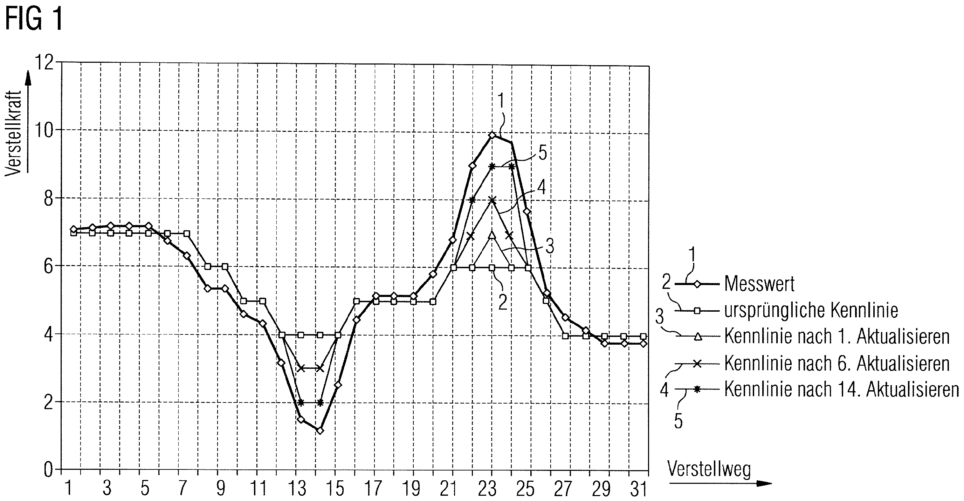

Die Figur 1 zeigt ein Szenario der Approximation einer Verstellkraftkennlinie an eine zuvor gemessene Zielkennlinie gemäß dem Stand der Technik. Die Darstellung ist beispielhaft für eine mikroprozessorgesteuerte Verstellvorrichtung, wie sie typischerweise bei Kraftfahrzeugen eingesetzt wird. Aus Sicherheitsgründen ist zur Begrenzung der Überschusskraft, ein Einklemmschutzsystem wirksam, welches bei einem Schließvorgang fortlaufend aktuell ermittelte Verstellkraftwerte mit korrespondierenden Verstellkraft-Vergleichswerten vergleicht. Die Überschusskraft ist dabei die Differenz zwischen der vom Motor bereitgestellten Verstellkraft abzüglich der aktuellen Verstellkraft, die zur Überwindung der Reibungskräfte in der Mechanik erforderlich ist. Je größer die Überschusskraft ist, desto schneller wird das Schließteil betätigt, desto größer ist aber auch die im Einklemmfall wirkende Einklemmkraft. Aus Sicherheitsgründen ist diese Einklemmkraft, wie eingangs bereits erwähnt, so gering zu halten. Dann ist das Verletzungspflegerisiko minimal. Die aktuellen Verstellkraftwerte werden durch Messung ermittelt. Dies kann beispielsweise aus einer Messung des Motorstroms verfolgen. Die aktuellen Verstellkraftwerte können aber auch indirekt ermittelt werden, beispielsweise durch einen Rechenvorgang in einem Mikrorechner, dem Impulse eines mit der Motorwelle gekoppelten Inkrementalgebers zugeführt werden.

Die ermittelten Verstellkraftwerte sind jeweils einer Position des Verstellweges zugeordnet. Jeder Verstellkraftwert wird digitalisiert, das heißt er besteht aus einer bestimmten Anzahl von Quantisierungseinheiten. Die Gesamtheit der ermittelten aktuellen Verstellkraftwerte bildet über den Verstellweg gesehen eine Kennlinie.

Bislang bekannte Algorithmen zur Aufnahme einer repräsentativen Lernkurve arbeiten so, dass die Aktualisierung der Referenzdaten nur dann aktiv ist, wenn bei einem Schließvorgang repräsentative Umgebungsbedingungen herrschen (Zimmertemperatur, stehendes Fahrzeug, normale Betriebsspannung), kein Einklemmvorgang erkannt wurde und eine relevante Abweichung zwischen der erwarteten Verstellkraft und einer beobachteten Verstellkraft vorliegt. Nur in diesem Fall wird eine Aktualisierung der Referenzdaten durchgeführt. Die Aktualisierung erfolgte genau in jenem Punkt, bei dem die größte Abweichung aufgetreten ist. In der Praxis heißt das, dass zu diesem Kennlinienpunkt eine Quantisierungseinheit (der Wert 1) addiert bzw. subtrahiert wird, falls die beobachtete Kraft höher bzw. niedriger als die erwartete Kraft ist.

In Figur 1 ist mit dem Bezugszeichen 1 eine Kennlinie bezeichnet, die aus einzelnen Messwerten gebildet ist, die jeweils aktuell ermittelten Verstellkraftwerten entsprechen. Mit dem Bezugszeichen 2 ist eine ursprüngliche Kennlinie bezeichnet, das kann zum Beispiel eine Lernkurve sein, die bei dem eingangs erwähnten Initialisierungslauf der Verstellvorrichtung ermittelt wurde. Wie bereits gesagt, erfolgt bei einem Einklemmerkennungssystem gemäß dem Stand der Technik die Aktualisierung so, dass ein Algorithmus der Steuereinrichtung zu einem bestimmten Kennlinienpunkt, eine Quantisierungseinheit addiert bzw. subtrahiert, je nachdem ob die gemessene Verstellkraft größer oder kleiner als eine erwartete Verstellkraft ist. In Figur 1 ist diese Approximation so dargestellt, dass ausgehend von der ursprünglichen Kennlinie 2 zu einem Wert, bei dem die Abweichung zwischen aktuellen und gespeicherten Verstellkraftwerten am größten ist, eine

Quantisierungseinheit addiert wurde (in der Skalierung der Figur 1 von 6 auf 7). Im Ergebnis erhält man also nach dieser ersten Aktualisierung eine Kennlinie von Verstellkraft-Vergleichswerten, die in Figur 1 mit dem Bezugszeichen 3 gekennzeichnet ist. Nach sechs Verstellvorgängen ergibt sich die mit dem Bezugszeichen 4 gekennzeichnete Kennlinien. Wie aus Figur 1 leicht erkennbar ist, besteht auch nach mehreren Verstellvorgängen (Kennlinie mit dem Bezugszeichen 5 nach der vierzehnten Aktualisierung) eine erhebliche Abweichung zwischen den aktuell gemessenen Verstellkraftwerten (Kennlinie 1) und der Approximationskennlinie 5 nach dem vierzehnten Schließvorgang. Die Approximationsgeschwindigkeit mit der sich die Kennlinie 2 an die Messwertkennlinie 1 annähert erfolgt also langsam.

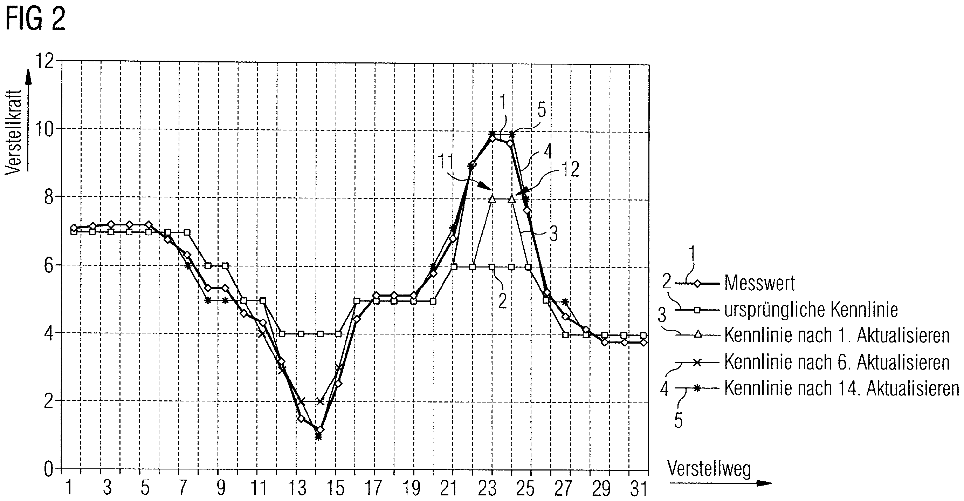

Im Vergleich hierzu ist in Figur 2 die erfindungsgemäße Approximation dargestellt. Gleiche Bezugszeichen kennzeichnen jeweils Kennlinien nach einer gleich großen Anzahl von Aktualisierungsvorgängen. In der folgenden Beschreibung wird wieder von der Ausgangskennlinie 2 ausgegangen. Nach dem ersten Verstellvorgang stellt sich eine Kennlinie ein, die in Figur 2 mit dem Bezugszeichen 3 gekennzeichnet ist. Die Pfeile 11 und 12 zeigen auf zwei aktualisierte Verstellkraft-Vergleichswerte, deren Wert um 2 erhöht wurde (in Figur 2 von 6 auf 8). Nach der sechsten Aktualisierung ist die Kennlinie 4 ihrem Ziel bereits sehr nahe gekommen. Nach dem vierzehnten Verstellvorgang hat sich die mit dem Bezugszeichen 5 gekennzeichnete Kennlinie den gemessenen Werte (Kennlinie 1) nahezu vollständig angenähert. Die Geschwindigkeit der Approximation erfolgt also durch das erfindungsgemäße Verfahren (bei dem mehrere Verstellkraft-Vergleichswerte um mehrere Quantisierungseinheiten verändert werden) weitaus schneller. Durch diese rasche Anpassung der Referenzdaten, wird erreicht, dass im Fall des Einklemmens die vom Antrieb entwickelte Überschusskraft geringer als bislang üblich gehalten werden kann. Dadurch ist die Verletzungsgefahr beim Einklemmen von Körperteilen geringer.

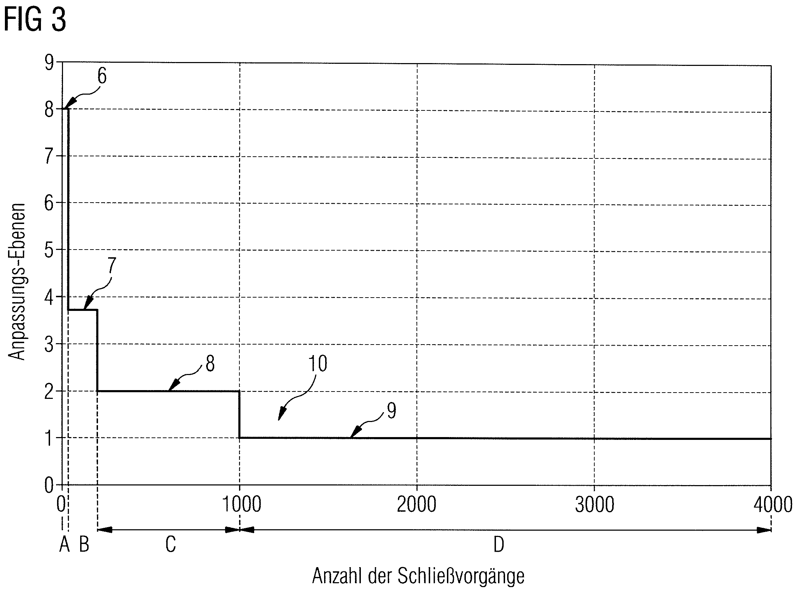

In Figur 3 ist gemäß einem Ausführungsbeispiel der Erfindung die Abhängigkeit zwischen der Intensität mit der die Verstellkraft-Vergleichswerte adaptiert werden von der Nutzungsdauer durch eine Kennlinie dargestellt. Diese Kennlinie 10 hat die Form eines Treppenpolygons. Die Nutzungsdauer bzw. die Lebensdauer wird durch die Anzahl der Verstellvorgänge, d.h. Schließvorgänge dargestellt. Auf der Abszisse des Diagramms in Figur 3 ist die Anzahl der Schließvorgänge von 0 bis 4000 und auf der Ordinate ist das Ausmaß der Adaption in form von Anpassungsebenen von null bis neun aufgetragen. Das Niveau der Stufen 6,7,8,9 der Anpassungsebenen fällt mit zunehmender Anzahl der Schließvorgänge. Jeder Stufe 6,7,8,9 ist jeweils ein Teilintervall A,B,C,D zugeordnet.

Desto höher das Niveau der Anpassungsebene ist, desto intensiver ist das Ausmaß oder der Grad der Anpassung (es wird bei mehreren Verstellkraft-Vergleichswerten die Amplitude in Richtung der Zielkurve 1 verändert). Die Art und Weise wie viele Verstellkraft-Vergleichswerte in welcher Quantität verändert werden, kann von Fall zu Fall unterschiedlich sein. Im einfachsten Fall entspricht die Anzahl der zu aktualisierenden Verstellkraft-Vergleichswerte und die Quantität der Änderung der jeweiligen Anpassungsebene. Dies bedeutet, dass im Beispiel der Figur 3 unmittelbar nach der Erstinbetriebnahme (Stufe 6) acht Verstellkraft-Vergleichswerte in ihrer Größe gemäß der der Stufe zugeordneten Anpassungsebene verändert werden. Das Ausmaß dieser Änderung ist in dieser Stufe 6 am größten, das heißt für das vorliegende Beispiel, dass die acht Verstellkraft-Vergleichswerte ebenfalls um acht Quantisierungseinheiten verändert werden. Es versteht sich von selbst, dass die Adaption je nach Anwendungsfall auch anders parametriert sein kann, so z.B. nur mit einem Teil der Verstellkraft-Referenzdaten, deren Wert mit einer unterschiedlich großen Anzahl von Quantisierungseinheiten angepasst wird. Am Ende der Lebensdauer (Stufe 9 in Figur 3) werden nicht mehrere, sondern nur mehr ein Verstellkraft-Vergleichswert aktualisiert. Damit wird erreicht, dass in diesem Abschnitt der Produktlebensdauer, in welchem nur mit geringen Änderungen der Reibungsverhältnisse der Mechanik zu rechnen ist, die Adaption entsprechend langsam verläuft. Einmalig einwirkende Ereignisse, wie beispielsweise eine einmalige einwirkende Kraft, hat nur einen geringen Einfluss auf die abgespeicherten Verstellkraft-Vergleichswerte. Dadurch wirken sich Störeinflüsse nur in einem geringen Ausmaß aus.

Wie aus den oben stehenden Erläuterungen zu Figur 2 und Figur 3 zusammenfassend hervorgeht, erfolgt also die Aktualisierung von Verstellkraft-Vergleichswerten in Abhängigkeit der Lebensdauer. Dadurch können gegensätzliche Anforderungen, insbesondere am Anfang und am Ende der Lebensdauer, berücksichtigt werden. Das Ausmaß der Änderungen ist über die Lebensdauer gesehen eine fallende Funktion: am Anfang erfolgt die Aktualisierung mit einer hohen Geschwindigkeit, zum Ende hin aber mit einer niedrigen Geschwindigkeit. Die hohe Geschwindigkeit der Anpassung am Anfang wird dadurch erreicht, indem die Anzahl der zu aktualisierenden Punkte und/oder das Ausmaß der Änderung groß ist. Eine niedrige Anpassungsgeschwindigkeit ist zum Ende der Nutzungsdauer wirksam. Sie wird dadurch erreicht, indem nur wenige Verstellkraft-Vergleichswerte und jeweils nur um eine geringe Anzahl von Quantisierungseinheiten beziehungsweise um nur eine einzige Quantisierungseinheit verändert wird.

Zusammenstellung der verwendeten Bezugszeichen
- 1: Kennlinie der aktuell ermittelten Verstellkraftwerte
- 2: Ausgangskennlinie
- 3: Kennlinie der Verstellkraft-Vergleichswerte nach dem ersten Verstellvorgang
- 4: Kennlinie der Verstellkraft-Vergleichswerte nach dem sechsten Verstellvorgang
- 5: Kennlinie der Verstellkraft-Vergleichswerte nachdem 14. Verstellvorgang
- 6: erste Stufe
- 7: zweite Stufe
- 8: dritte Stufe
- 9: vierte Stufe
- 10: Anpassungsebenen als Funktion der Anzahl der Schließvorgänge
- 11: Pfeil
- 12: Pfeil
- A, B, C, D: Teilintervalle

## Patentansprüche

1. Verfahren zur Begrenzung der Überschusskraft eines fremdkraftbetätigten Schließteils einer Verstellvorrichtung, bei dem ein Einklemmschutzsystem während eines Verstellvorgangs zumindest innerhalb eines Teilbereichs des Verstellweges jeweils in vorgegebenen Positionen des Schließteils aktuelle Verstellkraftwerte ermittelt und diese mit Verstellkraft-Vergleichswerten vergleicht, welche in einer Speichereinrichtung bereit gehaltenen werden, **dadurch gekennzeichnet, dass** zumindest einer dieser gespeicherten Verstellkraft-Vergleichswerte an mechanische Gegebenheiten der Verstelleinrichtung adaptiert wird und das Ausmaß dieser Adaption in Abhängigkeit der Nutzungsdauer vorgegeben wird.

2. Verfahren nach Anspruch 1, **dadurch gekennzeichnet, dass** das Ausmaß der Adaption mit zunehmender Nutzungsdauer verringernden wird.

3. Verfahren nach Anspruch 2, **dadurch gekennzeichnet, dass** die die Verringerung des Ausmaßes der Adaption über die Nutzungsdauer gesehen in Stufen durchgeführt wird.

4. Verfahren nach Anspruch 3, **dadurch gekennzeichnet, dass** jeder Stufe ein Teilintervall der Nutzungsdauer zugeordnet wird und jedem dieser Teilintervalle eine Anzahl von Schließvorgängen zugeordnet ist.

5. Verfahren nach Anspruch 4, **dadurch gekennzeichnet, dass** die Teilintervalle eine unterschiedliche Breite aufweisen.

6. Verfahren nach Anspruch 5, **dadurch gekennzeichnet, dass** die jedem Teilintervall zugeordnete Anzahl von Schließvorgängen mit zunehmender Nutzungsdauer größer wird.

7. Verfahren nach Anspruch 6, **dadurch gekennzeichnet, dass** in einem, sich unmittelbar nach der Erstinbetriebnahme anschließenden, ersten Teilintervall das Ausmaß der Adaption am größten ist.

8. Verfahren nach Anspruch 7, **dadurch gekennzeichnet, dass** bei einem Verstellvorgang, der dem ersten Teilintervall zugeordnet ist, bei der Adaption mehrere Verstellkraft-Vergleichswerte verändert werden.

9. Verfahren nach Anspruch 8, **dadurch gekennzeichnet, dass** bei einem Verstellvorgang, der dem ersten Teilintervall zugeordnet ist, bei der Adaption zumindest ein Verstellkraft-Vergleichswert um mehrere Quantisierungseinheiten verändert wird.

10. Verfahren nach Anspruch 6, **dadurch gekennzeichnet, dass** bei einem Verstellvorgang eine Anzahl von zugeordneten Verstellkraft-Vergleichswerten um mehrere Quantisierungseinheiten verändert wird.

11. Verfahren nach einem der Ansprüche 1 bis 10, **dadurch gekennzeichnet, dass** bei einer Erstinbetriebnahme in der Speichereinrichtung Verstellkraft-Vergleichswerte bereit gehalten werden, die nicht zuvor durch einen Initialisierungslauf dieser Verstellvorrichtung ermittelt wurden.

## Claims

1. Method for limiting the excess force of a closing part, actuated by external force, of an adjusting device, in which method, during an adjusting operation, an anti-pinch protection system determines current adjusting force values at least within a partial region of the adjusting path and respectively in predetermined positions of the closing part and compares them with adjusting force comparative values that are kept in a storage device, **characterized in that** at least one of these stored adjusting force comparative values is adapted to mechanical conditions of the adjusting device and the extent of this adaptation is predetermined according to the time in use.

2. Method according to Claim 1, **characterized in that** the extent of the adaptation is reduced as the time in use increases.

3. Method according to Claim 2, **characterized in that** the reduction of the extent of the adaptation is carried out in stages, seen over the time in use.

4. Method according to Claim 3, **characterized in that** each stage is assigned a partial interval of the time in use and each of these partial intervals is assigned a number of closing operations.

5. Method according to Claim 4, **characterized in that** the partial intervals are of different increments.

6. Method according to Claim 5, **characterized in that** the number of closing operations assigned to each partial interval becomes greater with increasing time in use.

7. Method according to Claim 6, **characterized in that** the extent of the adaptation is at the greatest in a first partial interval directly following the first time in operation.

8. Method according to Claim 7, **characterized in that**, in an adjusting operation that is assigned to the first partial interval, a number of adjusting force comparative values are changed in the adaptation.

9. Method according to Claim 8, **characterized in that**, in an adjusting operation that is assigned to the first partial interval, at least one adjusting force comparative value is changed by a number of quantization units in the adaptation.

10. Method according to Claim 6, **characterized in that**, in an adjusting operation, a number of assigned adjusting force comparative values is changed by a number of quantization units.

11. Method according to one of Claims 1 to 10, **characterized in that**, during a first time in operation, adjusting force comparative values that have not previously been determined by an initialization run of this adjusting device are kept in the storage device.

## Revendications

1. Procédé de limitation de la force excessive d'une pièce de fermeture, actionnée par une force extérieure, d'un ensemble d'ajustement, dans lequel un système de protection contre le coinçage pendant une opération d'ajustement détermine les valeurs effectives de la force d'ajustement au moins sur une partie de la course d'ajustement et en des positions prédéterminées de la pièce de fermeture et les compare à des valeurs comparatives de forces d'ajustement conservées dans un dispositif de mémoire, **caractérisé en ce que**
au moins l'une de ces valeurs comparatives de force d'ajustement conservées en mémoire est adaptée aux conditions mécaniques du dispositif d'ajustement et
**en ce que** l'amplitude de cette adaptation est prédéterminée en fonction de la durée d'utilisation.

2. Procédé selon la revendication 1, **caractérisé en ce que** l'amplitude de l'adaptation diminue lorsque la durée d'utilisation augmente.

3. Procédé selon la revendication 2, **caractérisé en ce que** la diminution de l'amplitude de l'adaptation est réalisée par gradins pendant la durée d'utilisation.

4. Procédé selon la revendication 3, **caractérisé en ce qu'**un intervalle partiel de la durée d'utilisation est associé à chaque gradin et **en ce qu'**un nombre d'opérations de fermeture est associé à chacun de ces intervalles partiels.

5. Procédé selon la revendication 4, **caractérisé en ce que** les intervalles partiels présentent des largeurs différentes.

6. Procédé selon la revendication 5, **caractérisé en ce que** le nombre d'opérations de fermeture associées à chaque intervalle partiel augmente lorsque la durée d'utilisation augmente.

7. Procédé selon la revendication 6, **caractérisé en ce que** l'amplitude de l'adaptation est la plus grande dans un premier intervalle partiel qui suit immédiatement la mise en service.

8. Procédé selon la revendication 7, **caractérisé en ce que** lorsqu'une opération d'ajustement est associée au premier intervalle partiel, plusieurs valeurs comparatives de la force d'ajustement sont modifiées lors de l'adaptation.

9. Procédé selon la revendication 8, **caractérisé en ce que** lorsqu'une opération d'ajustement est associée au premier intervalle partiel, au moins une valeur comparative de la force d'ajustement est modifiée de plusieurs unités de quantification lors de l'adaptation.

10. Procédé selon la revendication 6, **caractérisé en ce que** lors d'une opération d'ajustement, plusieurs valeurs comparatives de force d'ajustement associées sont modifiées de plusieurs unités de quantification.

11. Procédé selon l'une des revendications 1 à 10, **caractérisé en ce que** lors de la mise en service, des valeurs comparatives de force d'ajustement qui n'ont pas été déterminées précédemment par une passe d'initialisation de cet ensemble d'ajustement sont mises à disposition par le dispositif de mémoire.
